# EUROPEAN PATENT APPLICATION

(11) **EP 3 410 765 A1**
(43) Date of publication of application: **05.12.2018**
(21) Application number: 17173930.3
(22) Date of filing: 01.06.2017
(51) Int. Cl.: H04W 24/04, H04L 12/24

(54) **ACCESS POINT MONITORING**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

In a cellular communications network each access point C1, c2, etc maintains a neighbour table recording data relating to neighbouring access points and, on detection of a pilot transmission from another of the access points, updates the neighbour table to record a neighbour level for the detected access point according to the signal quality of the pilot transmission, and reports the updated neighbour table to an operation and maintenance system 41, and wherein the management system uses the neighbour data reported by the access poin/ The operation and maintenance system determines of the severity of an access point outage by reference to the number and level of neighbour access points associated with the outaged access point

## Description

This invention relates to operation of a cellular communications system, and in particular to the monitoring of operation of cellular base stations or access points.

As originally devised, cellular communications systems are deployed as a network of permanent fixed wireless base stations, each connected by a dedicated fixed link to a co-ordinating network control centre which handles call routing between the core network and mobile terminals communicating with the base stations, including handover of mobile terminals from one base station to another.

Since each base station is in direct communication with the network control centre it is a relatively straightforward matter to monitor and control their operation. In particular, detection of any failure of an individual base station or its backhaul connection, and any remedial action required, can be readily co-ordinated by the network control centre. Such remedial action may, for example, include a change in channel allocation and transmitter/receiver power of other base stations in order to maintain coverage in the area.

In order to facilitate handover, each base station maintains a record of other nearby base stations, to which a handover of a mobile terminal is likely to be most achievable. These base stations are typically the geographically closest, but local topography and differences in transmitter power may modify this. A base station transmits details of the nearby base stations - a "neighbour list" - to any mobile terminal with which it is currently in communication, in order to facilitate a handover by allowing a search by the terminal to be directed to the most likely candidates. The actual candidate to which handover is effected will depend on other factors, such as the location of the mobile terminal within the coverage area of the first base station (which will affect the relative signal qualities of the neighbours) and which neighbours currently have a channel available with which to communicate with the mobile terminal.

In a conventional network, the base stations are deployed by the network operator, and the operator can programme each base station with the identities and channel allocations of its neighbours as they too are deployed by the same operator. Changes in the conventional network of base stations are rare, and under the control of the operator, which can update the neighbour lists of any base stations affected by additions, removals or relocations of other base stations, or changes in their channel allocations using a manual process as part of the process of commissioning or decommissioning base stations.

A more recent development has been the introduction of "femtocells". These are access points that operate in a similar manner to conventional cellular base stations, but are intended for deployment on an ad hoc basis (that is, not according to any predetermined plan) by individual users to provide coverage in areas such as indoor locations where the main network of base stations does not provide adequate coverage for the user's purposes. Connection to the core network is usually made through a general data communications network such as the Internet, rather than a dedicated landline as is usual for fixed base stations.

As deployment of these femtocells is not under the control of the network operator, they may be switched on or off, or moved, by the user without notice to the network operator. The network operator is therefore not in direct control of the femtocells' operation, nor is it able to directly monitor the access points' operation to identify failures of the access points or their backhaul links. It also makes maintenance of a neighbour list impractical using conventional procedures, as changes can happen on much shorter timescales, and without the knowledge of the network operator.

It is known, for example from WO2012/093366 and WO2009/120939, for a mobile terminal to compile a neighbour list by detecting access points in its wireless range, either for its own use in readiness for a possible handover, or to report to the currently serving access point in order to update its neighbour list. These systems use the user terminal to identify the Neighbouring access points and report back to the access point and thus to an operation and maointenance system (hereinafter "OAM"). This method requires the mobile terminal to consume power scanning for signals from the local access points and processing the data acquired in order to maintain the neighbour list, which reduces battery life.

It is also known, from EP3068158, for access points to detect each other's pilot signals for the purpose of selecting a channel that does not interfere with others in the vicinity, in order to minimise re-use of identifiers.

According to the invention, there is provided a method of operating a cellular communications network comprising a plurality of access points and an operation and maintenance system, in which each access point maintains a neighbour table recording data relating to neighbouring access points and, on detection of a pilot transmission from another of the access points, updates the neighbour table to record a neighbour level for the detected access point according to the signal quality of the pilot transmission, and reports the updated neighbour table to the operation and maintenance system, and wherein the operation and maintenance system uses the neighbour data reported by the access points to determine of the severity of an access point outage by reference to the number and level of neighbour access points associated with the outaged access point.

Another aspect provides a cellular communications system comprising a plurality of access points and an operation and maintenance system, in which at least some of the access points have a scanning system for detecting pilot signals transmitted by other neighbouring access points and assessing signal quality of the pilot signals, a store for maintaining a neighbour table recording data relating to the neighbouring access points and a reporting system for generating neighbour update reports for transmission to the operation and maintenance system, and wherein the operation and maintenance system has a store for neighbour data received from the access points, and a fault management system for responding to outages of access points, the fault management system being responsive to the neighbour data recorded in the store to determine severity of an access point outage by reference to the number and level of neighbour access points associated with the outaged access point, and a configuration system to generate instructions for transmission to the access points to be reconfigured.

In a preferred arrangement, each access point monitors access points on its neighbour table for a heartbeat signal, and reports a potential outage of a neighbour access point if it fails to receive the heartbeat signal from the neighbour access point, and the operation and maintenance system co-ordinates potential outage reports from a plurality of access points to identify an actual outage.

The operation and maintenance system may control allocation of communications channels to the access points, allowing a remapping of channels to access points to be initiated in response to a detected outage of an access point, the remapping being prioritised to access points having a high neighbour level in relation to the outaged access point. The remapping may include revision of transmission power on each channel.

The operation and maintenance system may monitor backhaul connections from access points, identiying an outage of an access point if its backhaul connection is lost, and remapping channels to other access points according to the reported neighbour levels of those channels

The invention also extends to a process for remote configuration of a programmable device to operate as one of the wireless access points, by transmission of programme data to the device over a data communications connection. The invention also extends to a computer program element comprising computer program code to, when loaded into a computer system and executed thereon, cause the computer to perform the steps of the method of the invention.

The access points identify their neighbours through direct communication with each other and report their table to the OAM. Each access point monitors its neighbours directly to generate an updated neighbour table, and reports updates to the OAM, the OAM being responsive to an outage report received in relation to a access point by prioritising remapping according to the availability of neighbouring access points.

When an access point detects a pilot transmission from another access point, for instance when it is first switched on, it records a neighbour level for the detected access point according to the signal strength of the pilot transmission, updates a neighbour table maintained by the access point, and reports updates of its neighbour table to an operation and maintenance system. Updates sent to the operation and maintenance system include changes in a neighbour signal level. Outages of individual access points are detected by other access points reporting a failure to receive a heartbeat signal from a access point on the neighbour list, and such outages are also reported to the operation and maintenance system (OAM).

The OAM receives the neighbourhood table from the access points within its associated area to generate a map for the access points within the area, and make decisions regarding outages based on the degrees of the access points. The OAM uses the neighbour access points information to determine the severity of an outage by reference to the number and degree of neighbour access point(s) associated with the outaged access point(s).

Embodiments of the invention will now be described, by way of example, with reference to the drawings, in which:
- Figure 1 depicts the network entities which co-operate to perform the embodiment
- Figure 2 depicts a monitoring centre co-ordinating data from a number of operation and maintenance centres (OAM), each OAM controlling a number of base stations (access points). Degrees of neighbourhood are indicated between some of the stations
- Figure 3 depicts a radio access point configured to operate according to the invention
- Figure 4 depicts a network management entity configured to operate according to the invention
- Figure 5 depicts a process of outage management according to the invention
- Figure 6 depicts a neighbour table for one of the stations

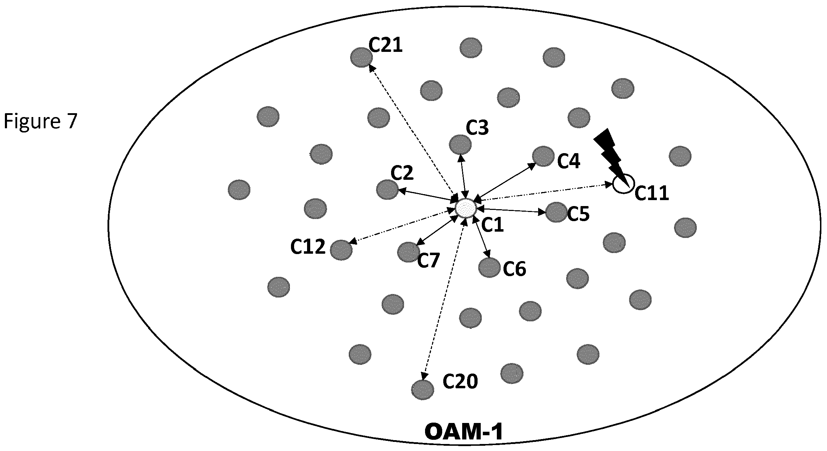

- Figure 7 depicts the radio access points of Figure 1 during an outage episode of one of the access points.

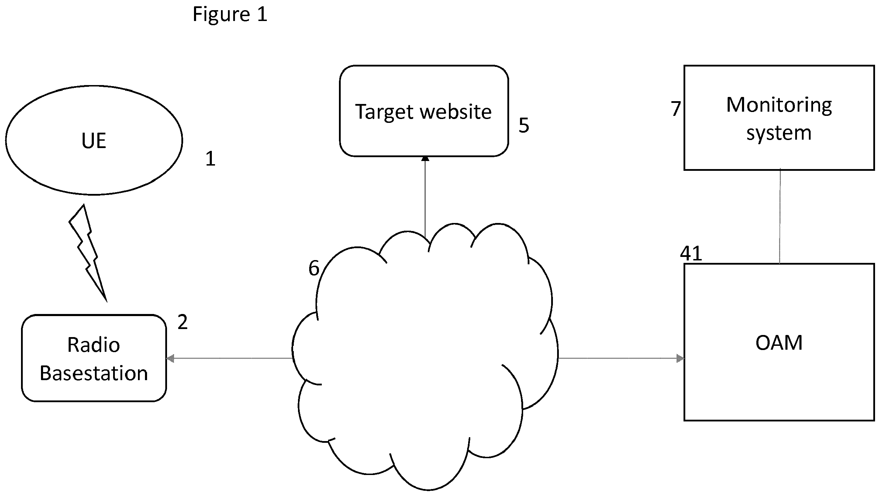

Figure 1 depicts in schematic form a simplified network 6 connected to an operation and maintenance system (OAM) 41, an access point (or radio base station) 2, and a target website server 5. A user terminal (UE) 1 can connect to the network 6 through the access point 2, and thereby communicate with the target website 5 and the management system 41. The management system 41 is monitored by a monitoring system 7. It will be recognised that in any practical system there will be many access points 2 and website servers 5 interconnected through the network 6, and each access point 2 may be connected to multiple user terminals 1.

The access points 2 may be domestic wireless routers, femtocells or enterprise femtocells connected wirelessly to the user terminals 1.

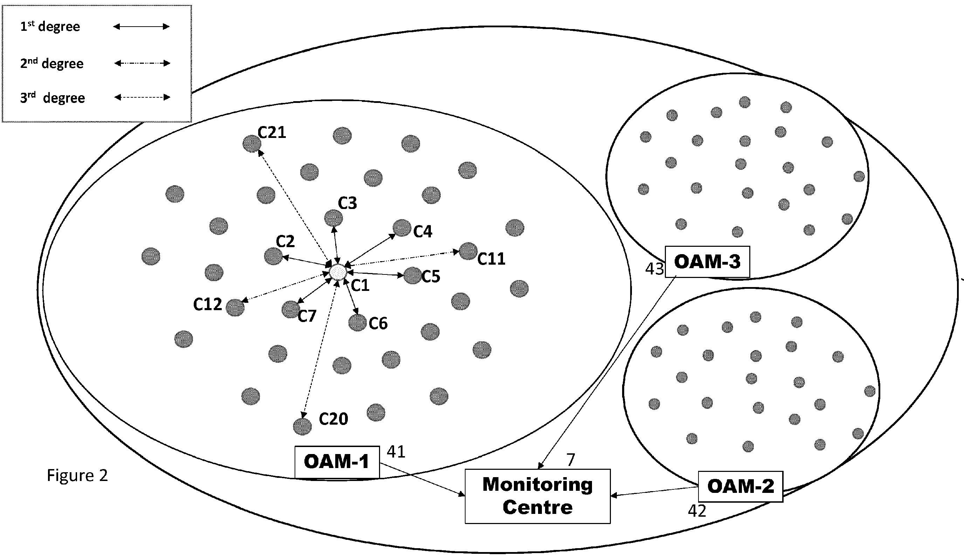

Figure 2 depicts a network comprising a plurality of individual access points (some of which are identified individually as C1, C2, C3 etc) each having a respective backhaul connection (not shown). As shown in Figure 2, each access point is in communication with an operation and maintenance management centre (OAM), of which there may be several 41, 42, 43 (OAM-1, OAM-2, OAM-3) - the OAM to which an access point is connected depends on which network is used to make the backhaul connection. The OAMs 41, 42, 43 co-operate with a monitoring centre 7.

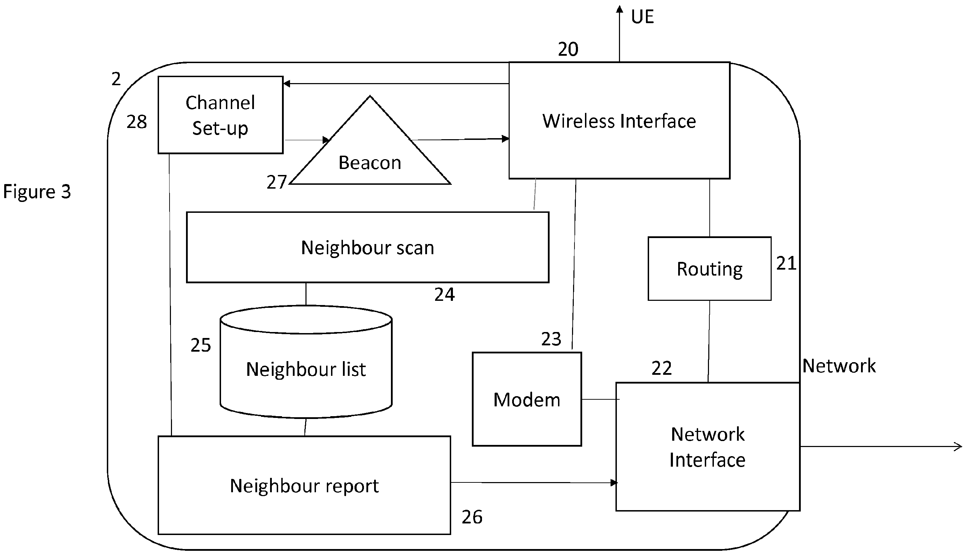

A wireless access point 2 configured to operate according to an embodiment of the invention is depicted schematically in more detail in Figure 3. The functional elements depicted in Figure 3 are typically embodied in software or firmware. The access point 2 has a wireless interface 20 for communication with user terminals 1, and a network interface 22 for connection to a data communications network 6 such as the Internet. Data packets are translated from one medium to the other by a modem 23 and routing processes such as reading and writing address packets are is controlled by a routing function 21. The access point also has a beacon function 27 which generates a pilot signal indicating the identity, access permissions, and other information about the access point to allow mobile terminals to make connection with the access point. A channel set up function 28 is used to configure the beacon 27 and wireless interface 20 to operate using the identity, access permissions, channels to be used by the access point, in accordance with commands transmitted from the network.

In addition to these conventional functions, the access point has a neighbour scanning function 24, which monitors the receiver of the wireless interface for pilot signals transmitted by the beacons of other access points. Information relating to these pilot signals, such as the access point identity and strength of the pilot signal, is compiled into a neighbour list stored in memory 25. A report function 26 transmits details of the neighbour list to an operation and maintenance system 3 from time to time by way of the network interface 26. Such reports may be made periodically, or in response to a significant change in the list. Such reports may also be used by the access point to control the channel set up processor 28 directly.

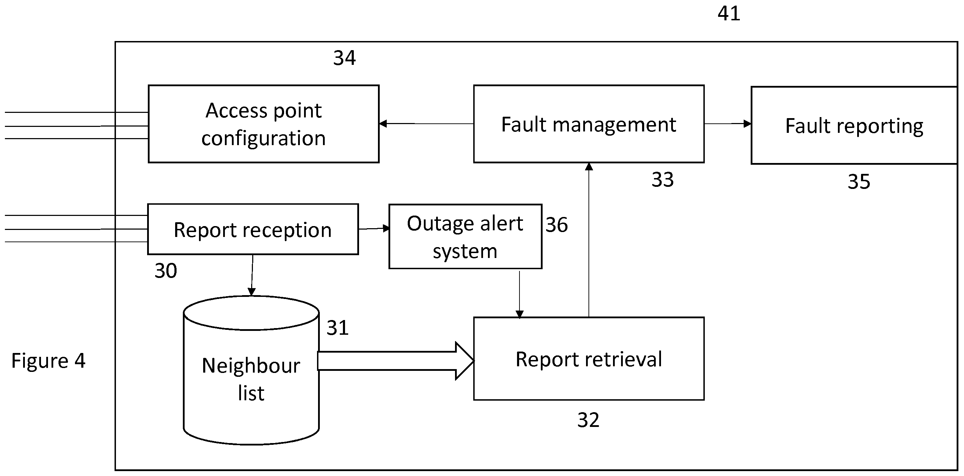

Figure 4 depicts a network management entity operating as an operation and mainatenace centre 41, which may be embodied in software, which co-operates with a number of access points 2 of the kind depicted in Figure 3. The functional elements include a report reception function 30 which is configured to receive neighbour list reports from the various access points. Such reports are stored in a database 31 for retrieval by a retrieval unit 32 which analyses the neighbour lists to identify possible outages of access points (for example by noting the absence of a access point from neighbour lists in which it was previously present) and reports to a fault management system 33 accordingly.

The fault management system may be responsive to outage reports by transmitting instructions to an access point configuration manager 34 to instruct the channel set-up functions 28 of individual access points to change their power or channel allocations. It may also include a fault reporting function 35 to report outages for investigation or repair. However, it should be noted that many such outages will be outside the control of the network operator, for example being caused by users disconnecting their individual femtocell equipment.

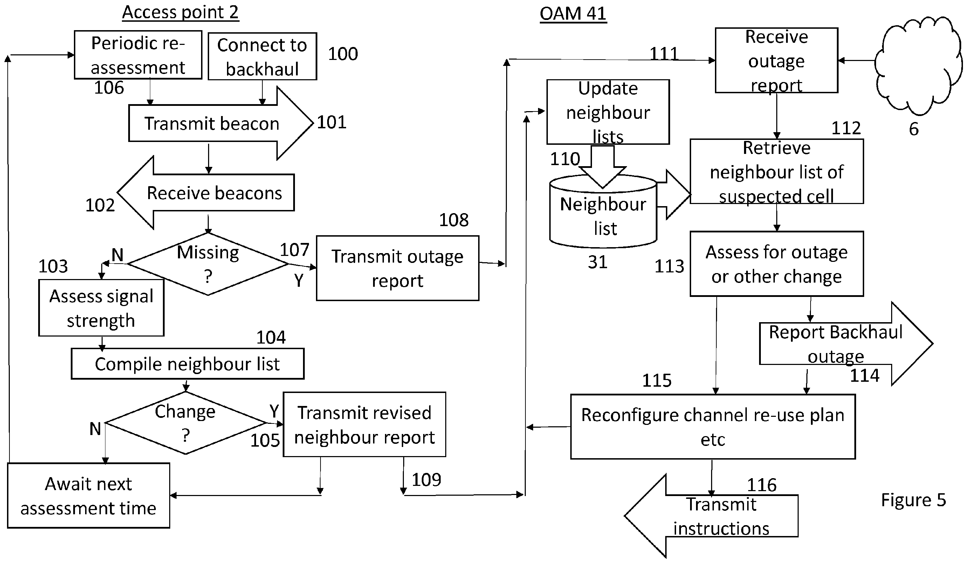

The process by which the access point 2 operates is depicted in Figure 5 and Figure 8. Figure 5 depicts a method for setting up a neighbour list, and Figure 8 depicts the actual monitoring and outage response.

As depicted in Figure 5, when an access point (for example access point "C1" in Figure 3) establishes a backhaul connection to the network, either when it is first plugged in to its backhaul link or after a reset (step 100), its pilot beacon 27 transmits a pilot wireless signal over the wireless interface 20 step (101) broadcasting information about its existence to be received by the neighbour scan function 24 of other access points within wireless reception range, such as access points C2-C7, C11, C12, C20, C21. Each access point C2, etc, which receives this signal adds the new access point C1 to its respective neighbourhood list 25. The newly-installed access point C1 similarly uses its own scanning function 24 to detect nearby access points already in operation C2, C3, etc (step 102) to compile a neighbour list 25 of its own (step 104).

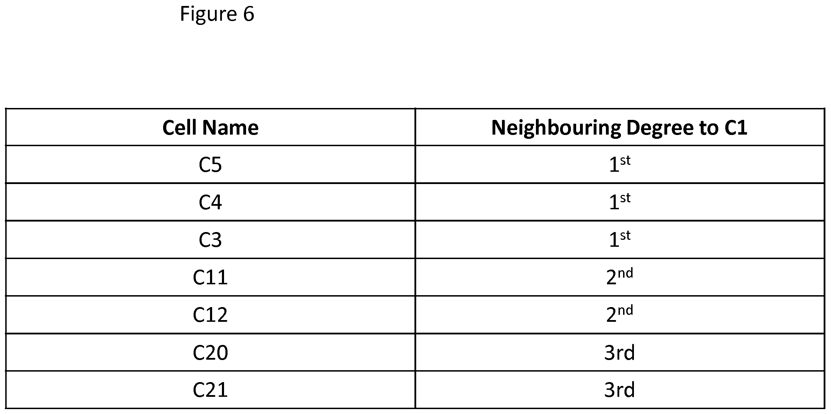

An example of such a neighbour list is depicted in Figure 6. This tabulation specifies a "degree" of neighbour based on the received pilot signal strength which is decided according to a predetermined threshold (step 103). Thus, as shown, C1:C5 are 1^{st} degree neighbours, C1:C11 are 2^{nd} degree neighbours and C1:C21 are 3^{rd} degree neighbours. Neighbour relations are generally reciprocal, although there may be circumstances in which a first access point gives a higher priority to a second than the second gives to the first, for example if the first access point is remote from any other access point (including the second) but the second access point is part of a cluster of closely spaced access points.

The reporting function 26 of each access point C1, C2 transmits a neighbour report (step 105) by way of the network interface 22 to the operation and management centre (OAM) 41 to update its report store 31 with the recently added access point "C1" and its neighbouring degree to them. In general, the neighbours will only inform the OAM 41 (step 105) when there is a new update.

The report reception function 30 of the OAM 6 receives the neighbourhood table data from the access points within its associated area (OAM-1 associated to Area 1), and uses them to generate and update a neighbouring map 31 for the access points within that area.

As shown at 106, each access point periodically transmits a "heartbeat" signal, which typically may be the same signal 101 as used when connection is first made. .If any neighbour of a given access point (C11) does not receive this heartbeat message within a predetermined period step 107) from their table and inform the OAM.

Periodic scanning (step 106) by the neighbour scan function 24 of each access point will identify changes caused by outages of individual access points, and these result in changes in the neighbour list (step 105) such as a change in neighbourhood degree if a pilot signal becomes weaker or stronger, or a possible outage if a signal can no longer be detected at all (step 107). These changes are reported (step 108, 109) to the report store 31 which records such changes (step 110) for retrieval by the retrieval function 32 to operate a fault management process.33

On receipt 111 of a report 108 indicative of a potential outage, the OAM 41 investigates further. There may be a number of reasons which an individual access point C1 can no longer detect a "heartbeat" from another access point C1 on its neighbour list. The cause could be some change in the environment of the reporting access point C1, such as movement of objects, such as doors, into positions which obstruct the transmission path between the two access points, or movement of the reporting access point itself.

The outage report is handled by an outage report system 36 which causes the data retrieval system 32 to retrieve data from the store 31 relating to the neighbour list of the access point C1 reported as having a suspected outage (step 112), and analyses that data to determine if an outage is the likely cause of the reported loss of signal. (113) In particular, the fault management system 33 checks reports of other neighbouring access points. Such reports will include determining whether other neighbour access points C2, C3, C4 etc on the neighbour list have also failed to detect the heartbeat signal of the suspect access point C1, as well as any recent reports by the suspect access point itself. In particular, if two access points C1, C11 each report having lost the pilot signal from the other, but report nothing wrong with their own operation, it may be concluded that there is an external effect causing the loss of contact.

The fault management processor 33 assesses the fault reports and other changes to the neighbour lists (step 113). If an outage appears to be the result of a backhaul failure - for example because the access point in question is still broadcasting a beacon but is not in communication with the OAM through the network 6, a report is transmitted to the operator of the backhaul connection to investigate the fault. The management system 33 also develops a revised channel re-use plan to accommodate any changes in the neighbour lists (step 115), for example by changing transmit power or channel allocation.

In particular, in a region where a large number of access points are operating, they are constrained to operate at less than maximum power in order to avoid interference between transmitters. If one of the access points is then removed, its neighbours may be instructed to increase power to ensure coverage is maintained in the area previously covered by the missing access point, with priority given to the access points having the highest value of neighbouring degree.

Similarly, if several access points are covering the same area, each one is instructed to use only a limited number of the channels on which they are capable of operation, in order to spread the traffic load amongst the individual access points. If one of the access points is then removed, its neighbours may be instructed to operate on the channels previously allocated to the missing access point, again prioritising the highest-degree neighbours.

The data is also used to help making decisions regarding outages or outage compensation based on certain criteria. The severity of an access point outage, and therefore the prioritisation of its repair and of any necessary remapping, can be made by reference to the number and degree of neighbour access points associated with the outaged access point, as this can determined how readily the area can be covered without the access point that is in outage.

By co-ordinating reports from several access points, outages can be more readily distinguished from other possible causes of a pilot failing to be detected by an individual access point. Intermittent losses of this kind may occur for example because of movement of the access point equipment, or of objects close to it such as a closing a door. By co-ordinating data from several access points, more reliable recording of outages is possible by the fault reporting system 35 and reconfiguration system 34.

The OAM 31 may also be able to detect patterns in outage reports, for example a cluster of outages amongst access points in a given area, or using a common backhaul method, suggesting a general problem rather than one specific to an individual access point.

The Service Provider (SP) may also build an overall monitoring system 7 collecting data from different OAMs 41, 42, 43, as shown in Figure 2

## Claims

1. A method of operating a cellular communications network comprising a plurality of access points and an operation and maintenance system, in which each access point maintains a neighbour table recording data relating to neighbouring access points and, on detection of a pilot transmission from another of the access points, updates the neighbour table to record a neighbour level for the detected access point according to the signal quality of the pilot transmission, and reports the updated neighbour table to the operation and maintenance system, and wherein the operation and maintenance system system uses the neighbour data reported by the access points to determine of the severity of an access point outage by reference to the number and level of neighbour access points associated with the outaged access point.

2. A method according to Claim 1, wherein each access point monitors access points on its neighbour table for a heartbeat signal, and reports a potential outage of a neighbour access point if it fails to receive the heartbeat signal from the neighbour access point, and the operation and maintenance system co-ordinates potential outage reports from a plurality of access points to identify an actual outage.

3. A method according to Claim 1 or Claim 2, wherein the operation and maintenance system controls allocation of communications channels to the access points, and wherein a remapping of channels to access points is initiated in response to a detected outage of an access point, the remapping being prioritised to access points having a high neighbour level in relation to the outaged access point.

4. A method according to Claim 3, wherein the remapping of channels includes revision of transmission power on each channel.

5. A method according to Claim 3 or Claim 4, in which the operation and maintenance system monitors backhaul connections from access points, identifies an outage of an access point if its backhaul connection is lost, and remaps channels to other access points according to the reported neighbour levels of those channels.

6. A cellular communications system comprising a plurality of access points and an operation and maintenance system, in which at least some of the access points have a scanning system for detecting pilot signals transmitted by other neighbouring access points and assessing signal quality of the pilot signals, a store for maintaining a neighbour table recording data relating to the neighbouring access points and a reporting system for generating neighbour update reports for transmission to the operation and maintenance system, and wherein the operation and maintenance system has a store for neighbour data received from the access points, and a fault management system for responding to outages of access points, the fault management system being responsive to the neighbour data recorded in the store to determine severity of an access point outage by reference to the number and level of neighbour access points associated with the outaged access point, and a configuration system to generate instructions for transmission to the access points to be reconfigured.

7. A cellular communications system according to Claim 6, wherein each access point has a monitor for detecting pilot signals from access points recorded in its neighbour table, and wherein the reporting system is arranged to generate an alert signal for transmission to the operation and maintenance system if the pilot signal relating to one of the neighbour access points is not received, and the fault management system in the operation and maintenance system is arranged to co-ordinate alerts received from the access points to identify outages of access points.

8. A cellular communications system according to Claim 6 or Claim 7, wherein the fault management system is arranged to control allocation of communications channels to the access points, and to initiate a remapping of channels to access points in response to a detected outage of an access point, the remapping being prioritised to access points having a high neighbour level in relation to the outaged access point.

9. A cellular communications system according to Claim 8, wherein the remapping of channels includes revision of transmission power on each channel.

10. A cellular communications system according to Claim 8 or Claim 9, in which the operation and maintenance system has means for monitoring backhaul connections from access points to identify access point outages

11. A process for remote configuration of a programmable device to operate according to the wireless access point of claim 6, claim 7, Claim 9 or Claim 10, by transmission of programme data to the device over a data communications connection.

12. A computer program element comprising computer program code to, when loaded into a computer system and executed thereon, cause the computer to perform the steps of a method as claimed in any of Claim 1, claim 2, claim 3, claim 4 or claim 5.
